# EUROPEAN PATENT APPLICATION

(11) **EP 3 897 041 A1**
(43) Date of publication of application: **20.10.2021**
(21) Application number: 19895234.3
(22) Date of filing: 13.12.2019
(51) Int. Cl.: H04W 48/16, H04W 48/18, H04W 12/12, H04W 48/02, H04W 60/04

(54) **NETWORK SEARCH METHOD AND APPARATUS, COMPUTER DEVICE, AND STORAGE MEDIUM**

(30) Priority: 14.12.2018 CN 201811537012
(71) Applicant: Oneplus Technology (Shenzhen) Co., Ltd., Shenzhen, Guangdong 518000 (CN)
(72) Inventor: PENG, Hongyi, Shenzhen, Guangdong 518000 (CN); ZHOU, Hanxin, Shenzhen, Guangdong 518000 (CN)
(74) Representative: De Arpe Tejero, Manuel
(86) International application number: PCT/CN2019/125176
(87) International publication number: WO 2020/119786

(57) **Abstract**

The present application relates to a network search method and apparatus, a computer device, and a storage medium. The method comprises: obtaining a network ID of a home public land mobile network; searching for a network ID of a public land mobile network equivalent to that of the home public land mobile network; when in a non-service state, setting the equivalent network ID of the public land mobile network as an equivalent network ID of the public land mobile network which allows to reside; and searching for a network according to the equivalent network ID of the public land mobile network which allows to reside. Applying the solution of the present application can ensure the stability of a network in which a cell phone resides, and efficiently reduce the network connection restoration time of a terminal.

## Description

The present application claims priority of Chinese Patent Application No. 201811537012.2, in the title of "NETWORK SEARCH METHOD, APPARATUS, COMPUTER DEVICE, AND STORAGE MEDIUM" filed on December 14, 2018, in the China National Intellectual Property Administration, the entire contents of which are hereby incorporated by reference in its entirety.

### TECHNICAL FIELD

The present disclosure relates to the field of communication technologies, and in particular to a network search method, an apparatus, a computer device, and a storage medium.

### BACKGROUND

After a terminal disconnects from a network and starts a network search process, when a pseudo base station with a strong signal exists in the surrounding environment, the terminal will often reselect the pseudo base station cell. After receiving a registration request from a mobile phone, the pseudo base station cell will refuse the terminal to register with the network. At this time, the terminal reports no service and is offline. Subsequently, the terminal starts the network search process again, but cannot camp on the searched network, and is in a state of no service for a long time.

### SUMMARY OF THE DISCLOSURE

Based on this, it is necessary to provide a network search method, an apparatus, a computer device and a computer storage medium for the technical problem that the terminal is in an out-of-service state for a long time, which can reduce the time for the terminal to restore the network connection.

In a first aspect, a network search method is provided, comprising: obtaining a network identity of a home public land mobile network; searching for anetwork identity ofequivalent public land mobile network that is equivalent to the network identity of the home public land mobile network; in response to being in an out-of-service state, configuring the network identity of the equivalent public land mobile network to be a network identity of an equivalent public land mobile network allowing to be camped on; and performing network searching based on the network identity of the equivalent public land mobile network allowing to be camped on.

In an embodiment, in response to being in an out-of-service state, the configuring the network identity of the equivalent public land mobile network to be the network identity of the equivalent public land mobile network allowing to be camped on comprises: in response to being in the out-of-service state and triggering a network registration request, configuring a state parameter corresponding to the equivalent public land mobile network to be state parameters corresponding to the equivalent public land mobile network allowing to be camped on.

In an embodiment, before the obtaining the network identity of the home public land mobile network, the method further comprises: after being offline, obtaining a network identity of a registered public land mobile network; performing network searching based on the network identity of the registered public land mobile network; and in response to the network searching failing, performing the obtaining the network identity of the home public land mobile network.

In an embodiment, after the searching for the network identity of the equivalent public land mobile network that is equivalent to the network identity of the home public land mobile network, the method further comprises: after being offline, obtaining a tracking area code of a pseudo base station cell; sending a tracking-area update request to the pseudo base station cell based on the tracking area code; receiving a message of refusing to camp sent by the pseudo base station cell; and writing the tracking area code of the pseudo base station cell into a prohibition list, and reporting information indicating no service available.

In an embodiment, after the performing the network searching based on the network identity of the equivalent public land mobile network allowing to be camped on, the method further comprises: obtaining a network identity with strongest signal intensity among the network identity of the equivalent public land mobile network allowing to be camped on; performing downlink synchronization based on the network identity with the strongest signal intensity, and obtaining a physical cell identity; and performing network camping based on the physical cell identity.

In an embodiment, the network identity of the equivalent public land mobile network that is equivalent to the network identity of the home public land mobile network comprise at least one of: a network identity of a home public land mobile network, a network identity of an equivalent home public land mobile network, and a network identity of an equivalent public land mobile network.

In an embodiment, the out-of-service state comprises a state of roaming being not allowed in a current area.

In a second aspect, a network search apparatus is provided, comprising:
an obtaining module, configured to obtain a network identity of a home public land mobile network;
a search module, configured to search for a network identity of a public land mobile network equivalent to the network identity of the home public land mobile network; and
a configuration module, configured to, in response to a terminal being in an out-of-service state, configure the network identity of the equivalent public land mobile network to be a network identity of an equivalent public land mobile network allowing to be camped on;

The search module is further configured to perform network searching based on the network identity of the equivalent public land mobile network allowing to be camped on.

In a third aspect, a computer device is provided, comprising a memory and a processor; wherein the memory stores a computer program, and the processor is capable of executing the computer program to perform: obtaining a network identity of a home public land mobile network; searching for a network identity of a public land mobile network equivalent to the network identity of the home public land mobile network; in response to a terminal being in an out-of-service state, configuring the network identity of the equivalent public land mobile network to be a network identity of an equivalent public land mobile network allowing to be camped on; and performing network searching based on the network identity of the equivalent public land mobile network allowing to be camped on.

In a fourth aspect, a computer-readable storage medium is provided, storing a computer program; wherein the computer program is capable of being executed by a processor to perform: obtaining a network identity of a home public land mobile network; searching for a network identity of a public land mobile network equivalent to the network identity of the home public land mobile network; in response to a terminal being in an out-of-service state, configuring the network identity of the equivalent public land mobile network to be a network identity of an equivalent public land mobile network allowing to be camped on; and performing network searching based on the network identity of the equivalent public land mobile network allowing to be camped on.

In the network search method, the apparatus, the computer device and the computer storage medium, a network identity of a home public land mobile network is obtained; a network identity of a public land mobile network equivalent to the network identity of the home public land mobile network is searched for; in response to being in an out-of-service state, the network identity of the equivalent public land mobile network is configured to be a network identity of an equivalent public land mobile network allowing to be camped on; and network searching is performed. In this way, the stability of the network on which the mobile phone camps may be ensured, and time for the terminal to restore network connection may be effectively reduced.

### BRIEF DESCRIPTION OF THE DRAWINGS

FIG. 1 is a schematic view of an application scenario according to an embodiment of the present disclosure.
FIG. 2 is a flow chart of a network search method according to an embodiment of the present disclosure.
FIG. 3 is a flow chart of network search operations according to an embodiment of the present disclosure.
FIG. 4 is a flow chart of a processing method when a pseudo base station is obtained according to an embodiment of the present disclosure.
FIG. 5 is a flow chart of a camping network according to an embodiment of the present disclosure.
FIG. 6 is a structural schematic block view of a network search apparatus according to an embodiment of the present disclosure.
FIG. 7 is an inner structural schematic view of a computer device according to an embodiment of the present disclosure.

### DETAILED DESCRIPTION

To make the purpose, technical solutions, and advantages of the present disclosure clearer, the following further describes the present disclosure in detail with reference to the accompanying drawings and embodiments. It should be understood that the specific embodiments described here are only to explain the present disclosure, but not to limit the present disclosure.

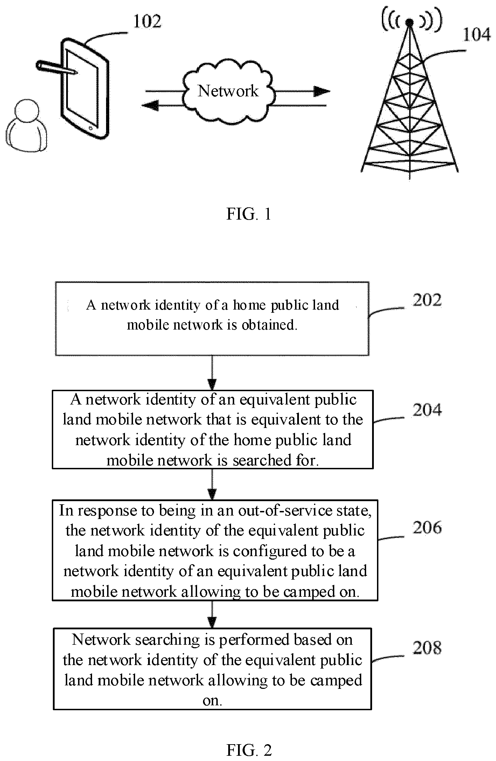

The network search method provided in the embodiments of the present disclosure can be applied to the application environment shown in FIG. 1. A terminal 102 communicates with a base station 104 through a network. The terminal 102 may be, but is not limited to, various personal computers, notebook computers, smart phones, tablet computers, and portable wearable devices.

In an embodiment, as shown in FIG. 2, a network search method is provided. Taking the method applied to the terminal in FIG. 1 as an example for description, the method includes the following operations illustrated at blocks.

At block 202: A network identity of a home public land mobile network is obtained.

The home public land mobile network (HPLMN) refers to the public land mobile network of home of the terminal, also known as the local public land mobile network. The network identity of the public land mobile network belongs to the network identity of the public land mobile network of the home. For example, in cases that the public land mobile network of the home is China Mobile's public land mobile network (PLMN), then correspondingly, the network identity of China Mobile includes 46000.

Specifically, the terminal obtains the network identity of the home public land mobile network. For example, in cases that the home public land mobile network of the terminal is China Unicom, then the obtained network identity of the home public land mobile network includes 46001. For example, in cases that the home public land mobile network is China Telecom, then the obtained network identity of the home public land mobile network includes 46003.

At block 204: A network identity of an equivalent public land mobile network that is equivalent to the network identity of the home public land mobile network is searched for.

The equivalent public land mobile network that is equivalent to the network identity of the home public land mobile network, refers to a public land mobile network (PLMN) on which the terminal can camp based on the network identity of the equivalent public land mobile network.

Specifically, the terminal searches for the network identity of the equivalent public land mobile network that is equivalent to the network identity of the home public land mobile network. For example, in cases that the home public land mobile network is China Mobile and the network identity of China Mobile is 46000, then the network identity of the public land mobile network equivalent to 46000 include 46008.

In this embodiment, the terminal searches for the network identity of the equivalent public land mobile network that is equivalent to the network identity of the home public land mobile network. The equivalent public land mobile network may be presented in the form of a list, and the list may contain one or more network identities of equivalent public land mobile networks.

At block 206: In response to being in an out-of-service state, the network identity of the equivalent public land mobile network is configured to be a network identity of an equivalent public land mobile network allowing to be camped on.

The public land mobile network allowing to be camped on refers to a public land mobile network allowing registration.

Specifically, after the terminal searches the network identity of the equivalent public land mobile network that is equivalent to the network identity of the home public land mobile network, the terminal tries camping on a public land mobile network equivalent to the network identity of the home public land mobile network. However, the terminal still cannot camp on the equivalent public land mobile network, and the terminal is in the out-of-service state. When the terminal is in the out-of-service state, a default state of the terminal at this time is Not Camping, and the terminal configures the network identity of the equivalent public land mobile network to be the network identity of the equivalent public land mobile network allowing to be camped on.

At block 208: Network searching is performed based on the network identity of the equivalent public land mobile network allowing to be camped on.

Specifically, the terminal searches network based on the network identity of the equivalent public land mobile network allowing to be camped on.

In this embodiment, when the network identity of the equivalent public land mobile network allowing to be camped on are represented in the form of the list, the terminal obtains the network identity of the public land mobile network at the first position in the list and camps on the network.

In the above network search method, a network identity of a home public land mobile network is obtained; a network identity of a public land mobile network equivalent to the network identity of the home public land mobile network is searched for; in response to being in an out-of-service state, the network identity of the equivalent public land mobile network is configured to be a network identity of an equivalent public land mobile network allowing to be camped on; and network searching is performed. In this way, the stability of the network on which the mobile phone camps may be ensured, and time for the terminal to restore network connection may be effectively reduced.

In an embodiment, in response to being in the out-of-service state, the configuring the network identity of the equivalent public land mobile network to be a network identity of an equivalent public land mobile network allowing to be camped on includes: in response to being in the out-of-service state and triggering a network registration request, configuring a state parameter corresponding to the equivalent public land mobile network to be the equivalent public land mobile network allowing to be camped on.

The value of each state parameter may include a first state parameter value and a second state parameter value. For example, the first state parameter value is true, and the second state parameter value is false. For example, the first state parameter value is 1, and the second state parameter value is 2. The registration request may be triggered when the registration state of the terminal is not an initial state, such as a state of network being registered and a state of network registered. The registration request may also be triggered when a registration network module initiates a network search request.

Specifically, when the terminal is in the out-of-service state and triggers the network registration request, the terminal configures the state parameter corresponding to the equivalent public land mobile network to be the equivalent public land mobile network allowing to be camped on. For example, when the equivalent public land mobile network is an equivalent home public land mobile network (EHPLMN), and the corresponding state parameter is is_ehplmn_to_be_camped, the terminal then configures the state parameter value to be the first state parameter value.

In this embodiment, for example, when the equivalent public land mobile network is the network identity of the home public land mobile network, the state parameter may be configured to be to be camped, that is, the terminal configures the state parameter to be the first state parameter value.

In this embodiment, for example, when the equivalent public land mobile network is the network identity of the equivalent public land mobile network (EPLMN), the state parameter corresponding to the EPLMN may be configured to be to be camped, that is, the terminal configures the state parameter as the first state parameter value.

In this embodiment, in a default state, when the terminal triggers the network search process of the connection management module, the value of the parameter "is ehplmn to be camped" is configured to be the first state parameter value, for example, the first state parameter value is true. When the terminal searches the network, the value of this parameter is configured to be the second state parameter value. For example, the second state parameter value is false, and the terminal stops searching the network. The network search operation performed after the terminal is connected to the pseudo base station cell is not performed by the connection management module, which causes the value of the parameter "is ehplmn to be camped" always to be the second state parameter value, such as false. In this way, the terminal is constantly in the out-of-service state. While the network registration request is triggered, and the value of the parameter "is ehplmn to be camped" is configured to be the first state parameter value, for example, true. That is, the network identity of the equivalent public land mobile network is configured to be the network identity of the equivalent public land mobile network allowing to be camped on. The network is then searched for based on the network identity of the equivalent public land mobile network allowing to be camped on. In this way, the stability of the network on which the mobile phone camps may be ensured, and time for the terminal to restore network connection may be effectively reduced.

In the above network search method, when the terminal is in the out-of-service state and the triggers network registration request, the state parameter corresponding to the equivalent public land mobile network is configured to be the equivalent public land mobile network allowing to be camped on. In this way, the operation may be simple and react quickly, the stability of the network on which the mobile phone camps may be ensured, and time for the terminal to restore network connection may be effectively reduced.

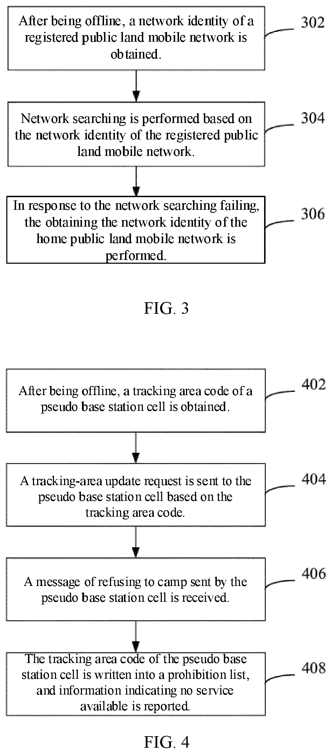

In an embodiment, as shown in FIG. 3, before the obtaining the network identity of the home public land mobile network, the method may further include operations at blocks as followed.

At block 302: After being offline, a network identity of a registered public land mobile network is obtained.

The registered public land mobile network refers to RPLMN, also called registered PLMN, which is the public land mobile network registered before the terminal was shut down or disconnected last time.

Specifically, the public land mobile network with highest priority is a registered public land mobile network. After going offline for the first time, the terminal first obtains the network identity of the registered public land mobile network.

At block 304: Network searching is performed based on the network identity of the registered public land mobile network.

Specifically, the terminal searches the network based on the network identity of the registered public land mobile network, and searches for the network identities of the public land mobile networks that are the same as the network identity of the registered public land mobile network. For example, the network identity of the registered public land mobile network is 46008, and the network is searched based on the network identity 46008.

In this embodiment, the network identity of the registered public land mobile network may include more than one network identities, and the terminal searches the network based on the list of the network identities of the PRMN

At block 306: In response to the network searching failing, the obtaining the network identity of the home public land mobile network is performed.

Specifically, when the network searching based on the network identity of the registered public land mobile network fails, the terminal performs the obtaining the network identity of the home public land mobile network.

In the above network search method, after being offline, a network identity of a registered public land mobile network is obtained; network searching is performed based on the network identity of the registered public land mobile network; and in response to the network searching failing, the obtaining the network identity of the home public land mobile network is performed. That is, network searching is performed based on the public land mobile networks of the highest priority, improving the efficiency of the network searching after offline. Moreover, when the terminal cannot search the network based on the network identity of the registered public land mobile network, there is a subsequent operation. In this way, the stability of the network on which the mobile phone camps may be ensured, and time for the terminal to restore network connection may be effectively reduced.

In an embodiment, as shown in FIG. 4, before the obtaining the network identity of the home public land mobile network, the method may further include operations at blocks as followed.

At block 402: After being offline, a tracking area code of a pseudo base station cell is obtained.

The pseudo base station is a fake base station, generally composed of terminals. Through related devices such as short message group senders and short message senders, the pseudo base station can search for card information within a certain radius centered on the pseudo base station. The pseudo base station can also shield signal of the operator, which can last from 10 to 20 seconds. After the pseudo base station pushes a short message to the terminal, the terminal can search the signal again. Tracking area code refers to TAC, which defines the tracking area code to which a cell belongs in a long-term evolution (LTE) network. One tracking area can cover one or more cells.

Specifically, after disconnecting from the network, and when searching the network again, the terminal may obtain the TAC of the pseudo base station cell.

At block 404: A tracking-area update request is sent to the pseudo base station cell based on the tracking area code.

The tracking-area update request refers to the TAU request, which may be configured to register new user location information on the network.

Specifically, the terminal initiates the TAU request to the pseudo base station cell based on the TAC of the pseudo base station cell.

At block 406: A message of refusing to camp sent by the pseudo base station cell is received.

Specifically, the pseudo base station cell sends a message to the terminal that the terminal is refused to camp on the network (that is, refused to register on the network), such that the terminal cannot camp on any network.

At block 408: The tracking area code of the pseudo base station cell is written into a prohibition list, and information indicating no service available is reported.

The prohibition list refers to a tracking area identity (TAI) list, which is configured to identify the tracking area. TAI is composed of mobile country code (MCC), mobile network code (MNC) and TAC.

Specifically, the terminal writes the tracking area code of the pseudo base station cell into the TAI list and reports that there is no service. The terminal is still offline at this time.

In the above network search method, after being offline, a tracking area code of a pseudo base station cell is obtained; a tracking-area update request is sent to the pseudo base station cell based on the tracking area code; a message of refusing to camp sent by the pseudo base station cell is received; and the tracking area code of the pseudo base station cell is written into a prohibition list, and information indicating no service available is reported. The terminal configures the network identity of the equivalent public land mobile network to the network identity of the equivalent public land mobile network allowing to be camped on. In this way, the stability of the network on which the mobile phone camps may be ensured, and time for the terminal to restore network connection may be effectively reduced.

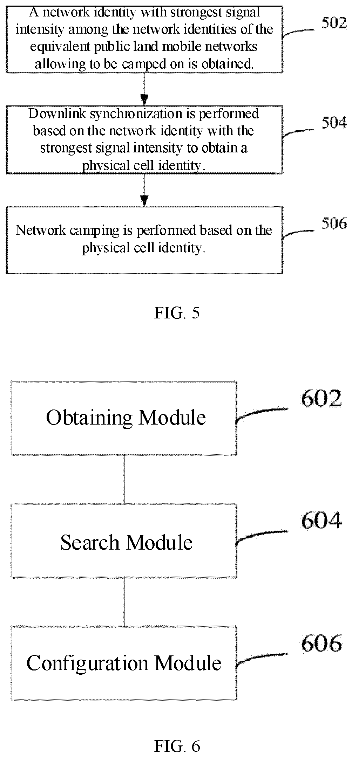

In an embodiment, as shown in FIG. 5, after the performing the network searching based on the network identity of the equivalent public land mobile network allowing to be camped on, the method may further include operations at blocks as followed.

At block 502: A network identity with strongest signal intensity among the network identities of the equivalent public land mobile networks allowing to be camped on is obtained.

Specifically, after the terminal successfully searches the network, the terminal may search one or more network identities of the equivalent public land mobile network allowing to be camped on. At this time, the terminal obtains the network identity with the strongest signal intensity among the network identities of the equivalent public land mobile networks allowing to be camped on. For example, the network identities of the equivalent public land mobile networks allowing to be camped on that the terminal has searched are 46000, 46002, 46007, and 46008. These network identities are arranged according to the strength of the signal. 46008 is the network identity with the strongest signal intensity. Then the terminal obtains the network identity 46008.

At block 504: Downlink synchronization is performed based on the network identity with the strongest signal intensity to obtain a physical cell identity.

The downlink synchronization is the first step to be completed after entering the cell. Only when the downlink synchronization is completed, can it start to receive other channels and perform other activities. The physical cell identity refers to PCI, by which the terminal distinguishes wireless signals of different cells.

Specifically, the terminal performs the downlink synchronization based on the network identity with the strongest signal intensity, searches for and selects a cell on which the terminal can camp, and obtains the physical cell identity.

At block 506: Network camping is performed based on the physical cell identity.

Specifically, the terminal camps based on the physical cell identity and performs an attach procedure to register with the network.

In the above network search method, a network identity with strongest signal intensity is obtained; downlink synchronization is performed to obtain a physical cell identity; and network camping is performed based on the physical cell identity. In this way, the terminal may register the network after the network searching, maintaining the stability of the network.

In an embodiment, the network identity of the equivalent public land mobile network that is equivalent to the network identity of the home public land mobile network include at least one of: network identity of home public land mobile network, network identity of equivalent home public land mobile network, and network identity of equivalent public land mobile network.

Specifically, the network identities of the public land mobile network equivalents to the network identity of the home public land mobile network include: the network identity of home public land mobile network, the network identity of equivalent home public land mobile network, and the network identity of equivalent public land mobile network. HPLMN, EHPLMN and EPLMN herein are arranged according to priority from high to low. The terminal first searches for the network identity of the public land mobile network that is the same as the network identity of the home public land mobile network, and when failing to find, searches for the network identity of equivalent home public land mobile network. When the network identity of equivalent home public land mobile network cannot be found, the terminal searches for the network identity of equivalent public land mobile network.

In this embodiment, the terminal first searches for the network identity of the public land mobile network that is the same as the network identity of the home public land mobile network. When the network identity of the same public land mobile network is searched, the terminal starts the process of camping on the network based on the same network identity. When the terminal cannot camp on the network based on the same network identity of the public land mobile network, that is, when the terminal is in the out-of-service state, the same network identity of the public land mobile network is configured to be the network identity of the public land mobile network allowing to be camped on. The terminal then camps on the network based on the same network identity of the public land mobile network.

In the above network search method, a network identity of a home public land mobile network is obtained; a network identity of a public land mobile network equivalent to the network identity of the home public land mobile network is searched for, wherein the network identity of the equivalent public land mobile network includes that of home public land mobile network, that of equivalent home public land mobile network, and that of equivalent public land mobile network; in response to being in an out-of-service state, the network identity of the equivalent public land mobile network is configured to be a network identity of an equivalent public land mobile network allowing to be camped on; and network searching is performed. In this way, the stability of the network on which the mobile phone camps may be ensured, and time for the terminal to restore network connection may be effectively reduced.

In an embodiment, the out-of-service state includes a state of roaming being not allowed in a current area.

Specifically, when the terminal receives a TAU rejection, of which reason value is 13, sent by the base station, indicating that roaming is not allowed in the current area, the public land mobile network selection process is started. At this time, the network identity of the equivalent public land mobile network is configured to be the network identity of the equivalent public land mobile network allowing to be camped on.

In the above network search method, after a message from the base station indicating roaming is not allowed in a current area is received by the terminal, the network identity of the equivalent public land mobile network is configured to be the network identity of the equivalent public land mobile network allowing to be camped on, and network searching is performed based on the network identity of the equivalent public land mobile network allowing to be camped on. In this way, the stability of the network on which the mobile phone camps may be ensured, and time for the terminal to restore network connection may be effectively reduced.

In an embodiment, the network searching includes the following operation.

Operation (a1): After being offline, a network identity of a registered public land mobile network is obtained.

Operation (a2): Network searching is performed based on the network identity of the registered public land mobile network.

Operation (a3): In response to the network searching failing, the obtaining the network identity of the home public land mobile network is performed.

Operation (a4): The network identity of the home public land mobile network is obtained.

Operation (a5): The network identity of the equivalent public land mobile network that is equivalent to the network identity of the home public land mobile network is searched for, wherein the network identity of the equivalent public land mobile network that is equivalent to the network identity of the home public land mobile network includes at least one of: a network identity of home public land mobile network, a network identity of equivalent home public land mobile network, and a network identity of equivalent public land mobile network.

Operation (a6): After being offline, a tracking area code of a pseudo base station cell is obtained.

Operation (a7): A tracking-area update request is sent to the pseudo base station cell based on the tracking area code.

Operation (a8): A message of refusing to camp sent by the pseudo base station cell is received.

Operation (a9): The tracking area code of the pseudo base station cell is written into a prohibition list, and information indicating no service available is reported.

Operation (a10): In response to roaming being not allowed in a current area, the network identity of the equivalent public land mobile network is configured to be the network identity of the equivalent public land mobile network allowing to be camped on.

Operation (a11): Network searching is performed based on the network identity of the equivalent public land mobile network allowing to be camped on.

Operation (a12): A network identity with strongest signal intensity among the network identity of the equivalent public land mobile network allowing to be camped on is obtained.

Operation (a13): Downlink synchronization is performed based on the network identity with the strongest signal intensity to obtain a physical cell identity.

Operation (a14): Network camping is performed based on the physical cell identity.

In the above network search method, a network identity of a home public land mobile network is obtained; a network identity of a public land mobile network equivalent to the network identity of the home public land mobile network is searched for; in response to being in an out-of-service state, the network identity of the equivalent public land mobile network is configured to be a network identity of an equivalent public land mobile network allowing to be camped on; network searching is performed, and network camping is performed thereafter. In this way, the stability of the network on which the mobile phone camps may be ensured, the efficiency of the network searching is improved, and time for the terminal to restore network connection may be effectively reduced.

It should be understood that although the various steps in the flowcharts of FIGS. 2-5 are displayed in sequence as indicated by the arrows, the operations are not necessarily performed in sequence in the order indicated by the arrows. Unless specifically stated in this specification, the execution of the operations is not strictly limited in order, and the operations can be executed in other orders. Moreover, at least some of the operations in FIGS. 2-5 may include multiple sub-steps or multiple stages. These sub-steps or stages are not necessarily executed at the same time, but can be executed at different times. These sub-steps or stages are not necessarily performed sequentially, but may be performed alternately or alternately with other operations or at least a part of sub-steps or stages of other operations.

In an embodiment, as shown in FIG. 6, a web search apparatus is provided, which includes: an obtaining module 602, a search module 604, and a configuration module 606.

The obtaining module 602 is configured to obtain a network identity of a home public land mobile network.

The search module 604 is configured to search for a network identity of a public land mobile network equivalent to the network identity of the home public land mobile network.

The configuration module 606 is configured to, in response to being in an out-of-service state, configure the network identity of the equivalent public land mobile network to be a network identity of an equivalent public land mobile network allowing to be camped on.

The search module 608 is also configured to perform network searching based on the network identity of the equivalent public land mobile network allowing to be camped on.

In the above network searching apparatus, a network identity of a home public land mobile network is obtained; a network identity of a public land mobile network equivalent to the network identity of the home public land mobile network is searched for; in response to being in an out-of-service state, the network identity of the equivalent public land mobile network is configured to be a network identity of an equivalent public land mobile network allowing to be camped on; and network searching is performed. In this way, the stability of the network on which the mobile phone camps may be ensured, and time for the terminal to restore network connection may be effectively reduced.

In an embodiment, the configuration module 606 is also configured to, in response to being in the out-of-service state and triggering a network registration request, configure state parameter corresponding to the equivalent public land mobile network to be the equivalent public land mobile network allowing to be camped on.

In the above network search device, when the terminal is in the out-of-service state and triggers the network registration request, the state parameter corresponding to the equivalent public land mobile network is configured to be the equivalent public land mobile network allowing to be camped on. In this way, the operation may be simple and react quickly, the stability of the network on which the mobile phone camps may be ensured, and time for the terminal to restore network connection may be effectively reduced.

In an embodiment, the obtaining module 602 is also configured to, after being offline, obtain a network identity of a registered public land mobile network. The search module 604 is also configured to perform network searching based on the network identity of the registered public land mobile network. The obtaining module 602 is also configured to, in response to the network searching failing, perform the obtaining the network identity of the home public land mobile network.

In the above network search apparatus, after being offline, a network identity of a registered public land mobile network is obtained; network searching is performed based on the network identity of the registered public land mobile network; and in response to the network searching failing, the obtaining the network identity of the home public land mobile network is performed. That is, network searching is performed based on the public land mobile networks of the highest priority, improving the efficiency of the network searching after offline. Moreover, when the terminal cannot search the network based on the network identity of the registered public land mobile network, there is a subsequent operation. In this way, the stability of the network on which the mobile phone camps may be ensured, and time for the terminal to restore network connection may be effectively reduced.

In an embodiment, the network search apparatus further includes a sending module and a receiving module. The obtaining module 602 is also configured to, after being offline, obtain a tracking area code of a pseudo base station cell. The sending module is configured to send a tracking-area update request to the pseudo base station cell based on the tracking area code. The receiving module is configured to receive a message of refusing to camp sent by the pseudo base station cell, write the tracking area code of the pseudo base station cell into a prohibition list, and report information indicating no service available.

In the above network search apparatus, after being offline, a tracking area code of a pseudo base station cell is obtained; a tracking-area update request is sent to the pseudo base station cell based on the tracking area code; a message of refusing to camp sent by the pseudo base station cell is received; and the tracking area code of the pseudo base station cell is written into a prohibition list, and information indicating no service available is reported (which will make the terminal unable to camp on the network for a long time). The terminal configures the network identity of the equivalent public land mobile network to the network identity of the equivalent public land mobile network allowing to be camped on. In this way, the stability of the network on which the mobile phone camps may be ensured, and time for the terminal to restore network connection may be effectively reduced.

In an embodiment, the network search apparatus further includes a synchronization module and a camping module. The obtaining module 602 is also configured to obtain a network identity with strongest signal intensity among the network identities of the equivalent public land mobile networks allowing to be camped on. The synchronization module is configured to perform downlink synchronization based on the network identity with the strongest signal intensity. The obtaining module 602 is also configured to obtain a physical cell identity. The camping module is configured to perform network camping based on the physical cell identity.

In the above network searching apparatus, a network identity with strongest signal intensity is obtained; downlink synchronization is performed to obtain a physical cell identity; and network camping is performed based on the physical cell identity. In this way, the terminal may register the network after the network searching, maintaining the stability of the network.

In an embodiment, the search module 604 is configured to search for the network identity of the equivalent public land mobile network that is equivalent to the network identity of the home public land mobile network, and the network identity of the equivalent public land mobile network that is equivalent to the network identity of the home public land mobile network include at least one of: network identity of home public land mobile network, network identity of equivalent home public land mobile network, and network identity of equivalent public land mobile network.

In the above network search apparatus, a network identity of a home public land mobile network is obtained; a network identity of a public land mobile network equivalent to the network identity of the home public land mobile network is searched for, wherein the network identity of the equivalent public land mobile network include those of home public land mobile network, those of equivalent home public land mobile network, and those of equivalent public land mobile network; in response to being in an out-of-service state, the network identity of the equivalent public land mobile network is configured to be a network identity of an equivalent public land mobile network allowing to be camped on; and network searching is performed. In this way, the stability of the network on which the mobile phone camps may be ensured, and time for the terminal to restore network connection may be effectively reduced.

In an embodiment, the out-of-service state includes a state of roaming being not allowed in a current area.

In the above network search apparatus, after a message from the base station indicating roaming is not allowed in a current area is received by the terminal, the network identity of the equivalent public land mobile network is configured to be the network identity of the equivalent public land mobile network allowing to be camped on, and network searching is performed based on the network identity of the equivalent public land mobile network allowing to be camped on. In this way, the stability of the network on which the mobile phone camps may be ensured, and time for the terminal to restore network connection may be effectively reduced.

For the specific limitation of the network searching apparatus, reference may be made to the above limitation of the network search method, which will not be repeated here. The various modules in the above network search apparatus can be implemented in whole or in part by software, hardware, and combinations thereof. The above modules may be embedded in the form of hardware or independent of the processor in the computer device, or may be stored in the memory of the computer device in the form of software, such that the processor can call and execute the operations corresponding to the above modules.

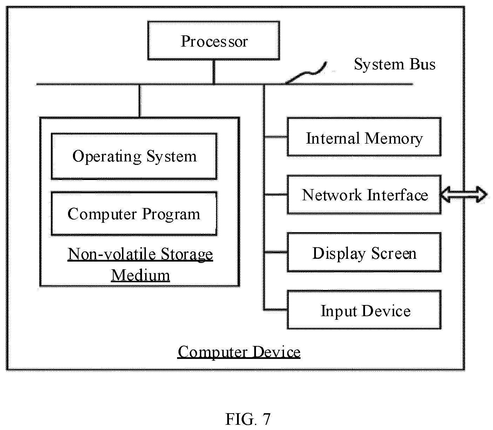

In an embodiment, a computer device is provided. The computer device may be a terminal, and an internal structure view thereof may be as shown in FIG. 7. The computer device includes a processor, a memory, a network interface, a display screen and an input device connected through a system bus. The processor of the computer device is configured to provide calculation and control capabilities. The memory of the computer device includes a non-volatile storage medium and an internal memory. The non-volatile storage medium stores an operating system and a computer program. The internal memory provides an environment for the operation of the operating system and computer program in the non-volatile storage medium. The network interface of the computer device is configured to communicate with an external terminal through a network connection. The computer program is executed by the processor to realize the network search method. The display screen of the computer device may be a liquid crystal display screen or an electronic ink display screen. The input device of the computer device may be a touch layer covered on the display screen; or a button, trackball or touch pad arranged on a housing of the computer device; or an external keyboard, a touchpad, a mouse, etc.

A person skilled in the art can understand that the structure shown in FIG. 7 is only a block view of part of the structure related to the solution of the present disclosure, and does not constitute a limitation on the computer device to which the solution of the present disclosure is applied. Specifically, the computer device may include more or fewer parts than shown in the figure, or combining some parts, or having a different arrangement of parts.

In an embodiment, a computer device is provided, including a memory and a processor; wherein the memory stores a computer program, and the processor is capable of executing the computer program to perform: obtaining a network identity of a home public land mobile network; searching for a network identity of a public land mobile network equivalent to the network identity of the home public land mobile network; in response to a terminal being in an out-of-service state, configuring the network identity of the equivalent public land mobile network to be a network identity of an equivalent public land mobile network allowing to be camped on; and performing network searching based on the network identity of the equivalent public land mobile network allowing to be camped on.

In an embodiment, the processor is capable of executing the computer program to further perform: in response to being in the out-of-service state and triggering a network registration request, configuring state parameter corresponding to the equivalent public land mobile network to be the equivalent public land mobile network allowing to be camped on.

In an embodiment, the processor is capable of executing the computer program to further perform: after being offline, obtaining a network identity of a registered public land mobile network; performing network searching based on the network identity of the registered public land mobile network; and in response to the network searching failing, performing the obtaining the network identity of the home public land mobile network.

In an embodiment, the processor is capable of executing the computer program to further perform: after being offline, obtaining a tracking area code of a pseudo base station cell; sending a tracking-area update request to the pseudo base station cell based on the tracking area code; receiving a message of refusing to camp sent by the pseudo base station cell; and writing the tracking area code of the pseudo base station cell into a prohibition list, and reporting information indicating no service available.

In an embodiment, the processor is capable of executing the computer program to further perform: obtaining a network identity with strongest signal intensity among the network identity of the equivalent public land mobile network allowing to be camped on; performing downlink synchronization based on the network identity with the strongest signal intensity, and obtaining a physical cell identity; and performing network camping based on the physical cell identity.

In an embodiment, the network identity of the equivalent public land mobile network that is equivalent to the network identity of the home public land mobile network include at least one of: a network identity of a home public land mobile network, a network identity of an equivalent home public land mobile network, and a network identity of an equivalent public land mobile network.

In an embodiment, the out-of-service state includes a state of roaming being not allowed in a current area.

In an embodiment, a computer-readable storage medium is provided, on which a computer program is stored. The computer program is capable of being executed by a processor to perform: obtaining a network identity of a home public land mobile network; searching for a network identity of a public land mobile network equivalent to the network identity of the home public land mobile network; in response to a terminal being in an out-of-service state, configuring the network identity of the equivalent public land mobile network to be a network identity of an equivalent public land mobile network allowing to be camped on; and performing network searching based on the network identity of the equivalent public land mobile network allowing to be camped on.

In an embodiment, the computer program is capable of being executed by the processor to further perform: in response to being in the out-of-service state and triggering a network registration request, configuring state parameter corresponding to the equivalent public land mobile network to be the equivalent public land mobile network allowing to be camped on.

In an embodiment, the computer program is capable of being executed by the processor to further perform: after being offline, obtaining a network identity of a registered public land mobile network; performing network searching based on the network identity of the registered public land mobile network; and in response to the network searching failing, performing the obtaining the network identity of the home public land mobile network.

In an embodiment, the computer program is capable of being executed by the processor to further perform: after being offline, obtaining a tracking area code of a pseudo base station cell; sending a tracking-area update request to the pseudo base station cell based on the tracking area code; receiving a message of refusing to camp sent by the pseudo base station cell; and writing the tracking area code of the pseudo base station cell into a prohibition list, and reporting information indicating no service available.

In an embodiment, the computer program is capable of being executed by the processor to further perform: obtaining a network identity with strongest signal intensity among the network identity of the equivalent public land mobile network allowing to be camped on; performing downlink synchronization based on the network identity with the strongest signal intensity, and obtaining a physical cell identity; and performing network camping based on the physical cell identity.

In an embodiment, the network identity of the equivalent public land mobile network that is equivalent to the network identity of the home public land mobile network comprise at least one of: a network identity of a home public land mobile network, a network identity of an equivalent home public land mobile network, and a network identity of an equivalent public land mobile network.

In an embodiment, the out-of-service state includes a state a state of roaming being not allowed in a current area.

A person skilled in the art can understand that all or part of the processes in the above embodiment methods can be implemented by instructing relevant hardware through a computer program. The computer program can be stored in a non-volatile computer readable storage. In the medium, the computer program may be executed to perform the procedures of the above method embodiments.

Any reference to memory, storage, database or other media mentioned in the embodiments provided in the present disclosure may include a non-volatile and/or volatile memory. Non-volatile memory may include read only memory (ROM), programmable ROM (PROM), electrically programmable ROM (EPROM), electrically erasable programmable ROM (EEPROM), or flash memory. Volatile memory may include random access memory (RAM) or external cache memory. As an illustration and not a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchronous chain Channel (Synchlink) DRAM (SLDRAM), memory bus (Rambus) direct RAM (RDRAM), direct memory bus dynamic RAM (DRDRAM), and memory bus dynamic RAM (RDRAM), etc.

The technical features of the above embodiments can be combined arbitrarily. In order to make the description concise, all possible combinations of the technical features in the above embodiments are not described. However, as long as there is no contradiction in the combination of these technical features, they should be considered as the range described in this specification.

The above embodiments only express several implementation manners of the present disclosure, and the description is relatively specific and detailed, but it should not be understood as a limitation on the scope of the present disclosure. It should be noted that for a person skilled in the art, without departing from the concept of the present disclosure, several modifications and improvements can be made, and these all fall within the scope of the present disclosure. Therefore, the scope of the present disclosure shall be subject to the appended claims.

## Claims

1. A network search method, **characterized by** comprising:
obtaining a network identity of a home public land mobile network;
searching for a network identity of equivalent public land mobile network that is equivalent to the network identity of the home public land mobile network;
in response to being in an out-of-service state, configuring the network identity of the equivalent public land mobile network to be a network identity of an equivalent public land mobile network allowing to be camped on; and
performing network searching based on the network identity of the equivalent public land mobile network allowing to be camped on.

2. The method according to claim 1, wherein in response to being in an out-of-service state, the configuring the network identity of the equivalent public land mobile network as the network identity of the equivalent public land mobile network allowing to be camped on comprises:
in response to being in the out-of-service state and triggering a network registration request, configuring a state parameter corresponding to the equivalent public land mobile network to be the equivalent public land mobile network allowing to be camped on.

3. The method according to claim 1 or 2, wherein before the obtaining the network identity of the home public land mobile network, the method further comprises:
after being offline, obtaining a network identity of a registered public land mobile network;
performing network searching based on the network identity of the registered public land mobile network; and
in response to the network searching failing, performing the obtaining the network identity of the home public land mobile network.

4. The method according to claim 1 or 2, wherein after the searching for the network identity of the equivalent public land mobile network that is equivalent to the network identity of the home public land mobile network, the method further comprises:
obtaining a tracking area code of a pseudo base station cell;
sending a tracking-area update request to the pseudo base station cell based on the tracking area code;
receiving a message of refusing to camp sent by the pseudo base station cell; and
writing the tracking area code of the pseudo base station cell into a prohibition list, and reporting information indicating no service available.

5. The method according to claim 1 or 2, wherein after the performing the network searching based on the network identity of the equivalent public land mobile network allowing to be camped on, the method further comprises:
obtaining a network identity with strongest signal intensity among the network identity of the equivalent public land mobile network allowing to be camped on;
performing downlink synchronization based on the network identity with the strongest signal intensity, and obtaining a physical cell identity; and
performing network camping based on the physical cell identity.

6. The method according to claim 1 or 2, wherein the network identity of the equivalent public land mobile network that is equivalent to the network identity of the home public land mobile network comprises at least one of:
a network identity of a home public land mobile network, a network identity of an equivalent home public land mobile network, and a network identity of an equivalent public land mobile network.

7. The method according to claim 1, wherein the out-of-service state comprises a state of roaming being not allowed in a current area.

8. A network search apparatus, comprising:
an obtaining module, configured to obtain a network identity of a home public land mobile network;
a search module, configured to search for a network identity of a public land mobile network that is equivalent to the network identity of the home public land mobile network; and
a configuration module, configured to, in response to a terminal being in an out-of-service state, configure the network identity of the equivalent public land mobile network to be a network identity of an equivalent public land mobile network allowing to be camped on;
wherein the search module is further configured to perform network searching based on the network identity of the equivalent public land mobile network allowing to be camped on.

9. The apparatus according to claim 8, wherein the configuration module is further configured to, in response to being in the out-of-service state and a network registration request being triggered, configure state parameters corresponding to the equivalent public land mobile network to be the equivalent public land mobile network allowing to be camped on.

10. The apparatus according to claim 8 or 9, wherein the obtaining module is further configured to, after being offline, obtain a network identity of a registered public land mobile network;
the search module is further configured to perform network searching based on the network identity of the registered public land mobile network;
the obtaining module is further configured to, in response to the network searching failing, perform the obtaining the network identity of the home public land mobile network.

11. The apparatus according to claim 8 or 9, further comprising a sending module and a receiving module;
wherein the obtaining module is further configured to, after being offline, obtain a tracking area code of a pseudo base station cell;
the sending module is configured to send a tracking-area update request to the pseudo base station cell based on the tracking area code;
the receiving module is configured to receive a message of refusing to camp sent by the pseudo base station cell, write the tracking area code of the pseudo base station cell into a prohibition list, and report information indicating no service available.

12. The apparatus according to claim 8 or 9, further comprising a synchronization module and a camping module;
wherein the obtaining module is further configured to obtain a network identity with strongest signal intensity among the network identity of the equivalent public land mobile network allowing to be camped on;
the synchronization module is configured to perform downlink synchronization based on the network identity with the strongest signal intensity and to obtain a physical cell identity;
the camping module is configured to perform network camping based on the physical cell identity.

13. A computer device, **characterized by** comprising a memory and a processor; wherein the memory stores a computer program, and the processor is capable of executing the computer program to perform:
obtaining a network identity of a home public land mobile network;
searching for a network identity of equivalent public land mobile network that is equivalent to the network identity of the home public land mobile network;
in response to being in an out-of-service state, configuring the network identity of the equivalent public land mobile network to be a network identity of an equivalent public land mobile network allowing to be camped on; and
performing network searching based on the network identity of the equivalent public land mobile network allowing to be camped on.

14. The computer device according to of claim 13, wherein the processor is capable of executing the computer program to further perform:
in response to being in the out-of-service state and triggering a network registration request, configuring a state parameter corresponding to the equivalent public land mobile network to be the equivalent public land mobile network allowing to be camped on.

15. The computer device according to of claim 13 or 14, wherein the processor is capable of executing the computer program to further perform:
after being offline, obtaining a network identity of a registered public land mobile network;
performing network searching based on the network identity of the registered public land mobile network; and
in response to the network searching failing, performing the obtaining the network identity of the home public land mobile network.

16. The computer device according to claim 13 or 14, wherein the processor is capable of executing the computer program to further perform:
obtaining a tracking area code of a pseudo base station cell;
sending a tracking-area update request to the pseudo base station cell based on the tracking area code;
receiving a message of refusing to camp sent by the pseudo base station cell; and
writing the tracking area code of the pseudo base station cell into a prohibition list, and reporting information indicating no service available.

17. The computer device according to claim 13 or 14, wherein the processor is capable of executing the computer program to further perform:
obtaining a network identity with strongest signal intensity among the network identity of the equivalent public land mobile network allowing to be camped on;
performing downlink synchronization based on the network identity with the strongest signal intensity, and obtaining a physical cell identity; and
performing network camping based on the physical cell identity.

18. A computer-readable storage medium, **characterized by** storing a computer program; wherein the computer program is capable of being executed by a processor to perform:
obtaining a network identity of a home public land mobile network;
searching for a network identity of equivalent public land mobile network that is equivalent to the network identity of the home public land mobile network;
in response to being in an out-of-service state, configuring the network identity of the equivalent public land mobile network to be a network identity of an equivalent public land mobile network allowing to be camped on; and
performing network searching based on the network identity of the equivalent public land mobile network allowing to be camped on.

19. The computer-readable storage medium according to claim 18, wherein the computer program is capable of being executed by the processor to further perform:
in response to being in the out-of-service state and triggering a network registration request, configuring a state parameter corresponding to the equivalent public land mobile network to be the equivalent public land mobile network allowing to be camped on.

20. The computer-readable storage medium according to claim 18 or 19, wherein the computer program is capable of being executed by the processor to further perform:
after being offline, obtaining a network identity of a registered public land mobile network;
performing network searching based on the network identity of the registered public land mobile network; and
in response to the network searching failing, performing the obtaining the network identity of the home public land mobile network.
